(19) Europäisches Patentamt
European Patent Office
Office européen des brevets

(11) **EP 2 640 020 B1**

(12) **FASCICULE DE BREVET EUROPEEN**

(45) Date de publication et mention
de la délivrance du brevet:
**06.04.2016 Bulletin 2016/14**

(51) Int Cl.:
***H04L 12/751*** *(2013.01)*   ***H04L 12/705*** *(2013.01)*

(21) Numéro de dépôt: **12305306.8**

(22) Date de dépôt: **15.03.2012**

(54) **Détection et correction de boucle de routage dans un réseau de routeurs utilisant un protocole de routage de type SPF**

Erkennung und Korrektur einer Routing-Schleife in einem Routernetz, das ein Routingprotokoll vom Typ SPF verwendet

Detection and correction of a routing loop in a network of routers using an SPF routing protocol

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.09.2013 Bulletin 2013/38**

(73) Titulaire: **ALCATEL LUCENT
92100 Boulogne-Billancourt (FR)**

(72) Inventeurs:
• **Hounkonnou, Carole
35042 Cedex Rennes (FR)**
• **Ghamri-Doudane, Samir
91620 Nozay (FR)**
• **Fabre, Eric
35042 Cedex Rennes (FR)**

(74) Mandataire: **Hirsch & Associés
137, rue de l'Université
75007 Paris (FR)**

(56) Documents cités:
• **AMAN SHAIKH, ROHIT DUBE, ANUJAN VARMA: "Avoiding Instability Duting Graceful Shutdown of Multiple OSPF Routers", ACM, 2 PENN PLAZA, SUITE 701 - NEW YORK USA, 2006, XP040042705,**
• **MOY SYCAMORE NETWORKS P PILLAY-ESNAULT JUNIPER NETWORKS A LINDEM REDBACK NETWORKS J: "Graceful OSPF Restart; rfc3623.txt", 20031101, 1 novembre 2003 (2003-11-01), XP015009405, ISSN: 0000-0003**
• **SHAIKH A ET AL: "Avoiding instability during graceful shutdown of OSPF", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 2, 23 juin 2002 (2002-06-23), pages 883-892, XP010593651, DOI: 10.1109/INFCOM.2002.1019335 ISBN: 978-0-7803-7476-8**

Printed by Jouve, 75001 PARIS (FR)

## Description

## DOMAINE TECHNOLOGIQUE

La présente invention concerne de manière générale les routeurs de réseau utilisant un protocole de routage dynamique à état de lien de type "à plus court chemin d'abord", encore appelé protocole SPF pour Shortest Path First en anglais.

## ARRIERE PLAN TECHNOLOGIQUE

Le protocole de type SPF le plus utilisé actuellement est le protocole OSPF (pour Open Shortest Path First en anglais). Ce protocole de routage dynamique à état de lien est détaillé dans la RFC2328. Ce protocole permet d'établir des tables de routage pour un réseau de routeurs en fonction de l'état des liens (ou liaisons) entre les routeurs du réseau.

La prise en compte par le protocole OSPF de l'état des liaisons entre les routeurs permet à un routeur qui doit envoyer des données à une destination donnée, de choisir la route qui présente la meilleure bande passante globale, même s'il ne s'agit pas de la route la plus courte en métrique de nombre de saut (ou routeur) qui sépare le routeur émetteur du routeur destinataire. En particulier, l'état d'un lien entre deux routeurs correspond à un coût qui est un nombre déterminé en fonction du débit de données disponible entre lesdits routeurs. Plus le débit disponible est important et plus le coût est faible, par exemple 1, et plus le débit est faible plus le coût est important, par exemple 10. Le coût d'une route est calculé par addition des coûts des liens qui relient entre eux les routeurs successifs de cette route.

Dans un réseau de routeurs utilisant le protocole OSPF, les routeurs diffusent par inondation l'état de leurs liens, c'est-à-dire l'état de leurs interfaces réseau, avec les routeurs voisins sous forme de paquets appelés LSAs (pour Link State Advertisement en anglais que l'on peut traduire par annonces de l'état des liens en français).

Chaque routeur dispose ainsi d'une table de LSAs, appelée LSDB (pour Link State Database en anglais), qui lui permet de connaitre l'état de liaison entre chaque paire de routeurs du réseau. L'algorithme SPF de Dijkstra est alors appliqué à cette table LSDB pour calculer une table de routage pour chaque routeur source. La table de routage est une liste de routeurs voisins, appelés "net hop", à qui le paquet de données doit être transmis en fonction de la destination à atteindre. La table de routage obtenue contient les routes les plus courtes en terme de coût qui permettent d'atteindre les différents routeurs du réseau depuis ce routeur source.

Le calcul des routes selon l'algorithme SPF de Dijkstra, encore appelé algorithme du plus court chemin d'abord, est détaillé dans la section 16 de la RFC2328.

En cas de redémarrage d'un routeur, la RFC3623 propose un mécanisme d'amélioration du protocole de routage OSPF par lequel le routeur redémarrant peut continuer à faire transiter des données vers une destination donnée, même si la fonction de contrôle de la table de routage de ce routeur est redémarrée. Ce mécanisme est appelé mécanisme de redémarrage OSPF en mode continuité de trafic (OSPF graceful-restart en anglais) ou encore redémarrage OSPF avec émission sans interruption.

En effet, la fonction de transmission de données du routeur qui redémarre peut rester active, même si la fonction de contrôle associée n'est plus disponible du fait du redémarrage du routeur, ce qui permet au routeur redémarrant de continuer à transmettre des données conformément à sa table de routage qui reste figée tant que le routeur redémarre.

Un tel mécanisme permet d'éviter aux routeurs du réseau de devoir recalculer toutes leurs tables de routage pour contourner le routeur en cours de redémarrage, ce qui reviendrait de fait à retirer ce dernier de la topologie, et donc à ne plus lui envoyer de trafic. L'impact du redémarrage du routeur sur le trafic de données du réseau est ainsi réduit.

Cependant, si au cours du redémarrage dudit routeur, la topologie du réseau change de telle sorte qu'au moins l'un des routeurs modifie son routeur successeur pour au moins une destination, le routeur qui redémarre ne peut pas prendre en compte ce changement puisqu'il ne peut pas mettre à jour sa table de routage et il existe alors un risque d'apparition de boucle(s) de routage.

Ainsi, en cas de changement de topologie et pour éviter tout risque de boucle de routage, la RFC3623 préconise d'interrompre le mécanisme de redémarrage en mode continuité de trafic dudit routeur.

Le routeur redémarre alors de manière classique en étant retiré de la topologie du réseau de sorte qu'il n'est plus visible par les autres routeurs au cours de son redémarrage. Les autres routeurs du réseau recalculent les nouvelles routes suite à ce changement de topologie pour faire reconverger le réseau, ce qui peut ralentir le trafic dans le réseau.

Cependant, un changement de topologie n'entraine pas nécessairement de boucle de routage lorsqu'un routeur redémarre en mode continuité de trafic.

Il existe donc un besoin de pouvoir détecter une boucle de routage dans le réseau au cours du redémarrage d'un routeur en mode continuité de trafic pour éviter de devoir systématiquement interrompre le mécanisme de redémarrage en mode continuité de trafic dudit routeur lorsqu'un changement de topologie se produit dans le réseau.

Il est également souhaitable de pouvoir corriger une boucle de routage détectée à la suite d'un tel changement de topologie.

Le document AMAN SHAIKH, ROHIT DUBE, ANUJAN VARMA: "Avoiding Instability During Graceful Shutdown of Multiple OSPF Routers", ACM, 2 PENN PLAZA, SUITE 701 - NEW YORK USA, 2006, XP040042705 traite du problème des boucles et fournit deux conditions nécessaires à la formation de boucles de routage lorsque plusieurs routeurs sont inactifs.

## OBJET DE L'INVENTION

Les différents modes de réalisation décrits ci-après permettent d'améliorer un protocole de routage de type SPF pour bénéficier pleinement des performances du mécanisme de redémarrage d'un routeur en mode continuité de trafic.

Selon un mode de réalisation de l'invention, il est proposé une méthode pour détecter, dans un réseau de routeurs utilisant un protocole de routage dynamique à état de lien, appelé protocole SPF, une destination risquant de générer une boucle de routage lorsque ledit réseau de routeurs passe :

- d'une topologie donnée, appelée topologie initiale, avant le redémarrage d'un routeur selon un mode, dit continuité de trafic, pour lequel la fonction de contrôle de la table de routage du routeur est redémarrée, mais pour lequel la fonction de transmission de données reste active,
- à, au cours du redémarrage dudit routeur, une topologie différente, dite topologie actuelle, pour laquelle au-moins un autre routeur a modifié dans sa table de routage, pour au-moins une destination donnée, son routeur successeur,

ladite méthode comprenant les étapes suivantes :

- détermination du graphe de source du routeur redémarrant sur la base de ladite topologie initiale du réseau ;
- pour chacun des routeurs, appelés routeurs de détection, qui sont voisins du routeur redémarrant dans le graphe de source dudit routeur redémarrant, détermination du graphe de source du routeur de détection correspondant sur la base de la topologie actuelle du réseau ;
- pour chaque routeur de détection, détermination d'un premier ensemble comprenant les routeurs descendants dudit routeur de détection dans le graphe de source du routeur redémarrant, et d'un deuxième ensemble comprenant les routeurs descendants du routeur redémarrant dans le graphe de source dudit routeur de détection ;

  - pour chaque routeur de détection détermination d'un troisième ensemble, formé de l'intersection du premier ensemble et du deuxième ensemble.

Grâce une telle méthode de détection de boucle de routage, il est possible de maintenir le redémarrage du routeur en mode continuité de trafic même lorsqu'un changement de topologie se produit au cours de ce redémarrage lorsqu'il s'avère qu'aucune destination du réseau ne risque de créer une boucle de routage.

Dans ce cas, on conserve le bénéfice du mode continuité de trafic pour le redémarrage du routeur puisque ledit routeur continue d'être utilisé pour acheminer des données, ce qui permet de fluidifier le traffic et limite le recours à un recalcul des tables de routage par le protocole (O)SPF.

Comme détaillé ci-après, même lorsqu'une destination du réseau crée une boucle de routage, il est possible dans certaines conditions de corriger provisoirement cette boucle de routage, ce qui permet alors de maintenir le redémarrage du routeur en mode continuité de trafic, après quoi la mesure de correction est retirée.

Préférentiellement, ledit protocole de type SPF est le protocole OSPF.

Avantageusement, si l'union desdits troisièmes ensembles est vide, le redémarrage du routeur en mode continuité de trafic est maintenu.

Selon d'autres modes de réalisation, il est proposé une méthode de correction de boucle de routage dans un réseau de routeurs utilisant un protocole de routage dynamique à état de lien, appelé protocole SPF, et pour laquelle l'union desdits troisièmes ensembles, comprend un routeur, appelé routeur de destination à risque, ladite méthode comprenant les étapes de :

- détermination du graphe de destination du routeur de destination à risque ;
- détermination pour chacun des routeurs dudit graphe de destination du routeur de destination à risque, éventuellement à l'exception du routeur redémarrant, du nombre minimal de routeurs du réseau qui doivent changer leur routeur successeur, appelé nombre de redirections minimal, pour atteindre le routeur de destination à risque, la plus grande valeur du nombre de redirections minimal ainsi déterminée étant notée Rmax,
- pour R = 1 à Rmax, redirection, pour chaque ensemble de routeur(s) présentant un nombre de redirections minimal égal R, d' un routeur dudit ensemble de routeur(s) vers un routeur d'un ensemble de routeur(s) présentant un nombre de redirections minimal égal à R-1.

Selon un aspect particulier, les routeurs qui dans le graphe de destination du routeur de destination à risque font partie d'une route d'accès au routeur de destination à risque, présentent un nombre de redirections minimal égal à 0.

Préférentiellement, l'ordre de redirection desdits routeurs à rediriger est l'ordre croissant de leur nombre de redirections.

Selon différents modes de réalisation, il est prévu que si la valeur Rmax est supérieure à une valeur seuil prédéfinie, ou si Rmax vaut l'infini, l'étape de redirection de routeur n'est pas effectuée et le redémarrage en mode continuité de trafic du routeur redémarrant est arrêté. Dans ce cas, le routeur redémarrant est retiré de la topologie du réseau et les autres routeurs recalculent leur table de routage en fonction de la nouvelle topologie.

Selon un mode de réalisation préféré, après redémarrage du routeur correspondant, les routeurs redirigés sont de nouveau redirigés vers leur routeur successeur d'origine dans l'ordre décroissant de leur nombre de redirections.

Avantageusement, après redémarrage du routeur correspondant, les données d'état de lien entre ledit routeur et les routeurs voisins dudit routeur sont mises à jour, ainsi que la table de routage dudit routeur.

Selon un mode de réalisation particulier, lorsque, suite à l'exécution d'une méthode de détection de boucle telle que décrite ci-dessus, au moins deux routeurs de destination à risque sont déterminés et que l'un des routeurs de destination à risque, dit deuxième routeur, est, dans le graphe de source d'un des routeurs de détection, un descendant de l'autre routeur de destination à risque, appelé premier routeur à risque, la ou les tables de routage du ou des routeurs redirigés pour atteindre le premier routeur à risque sont également modifiées pour atteindre le deuxième routeur à risque.

Selon d'autres modes de réalisation de l'invention, il est aussi proposé un réseau de routeurs configurés pour utiliser un protocole de routage dynamique de type à état de lien, appelé protocole SPF, lesdits routeurs étant configurés pour détecter au moins une destination risquant de générer une boucle de routage selon une méthode de détection de boucle telle que décrite ci-dessus.

Selon d'autres modes de réalisation de l'invention, il est aussi proposé un réseau de routeurs configurés pour corriger ladite au-moins une boucle de routage selon une méthode de correction de boucle telle que décrite ci-dessus.

D'autres modes de réalisation de l'invention concernent aussi un programme d'ordinateur comprenant des instructions de code de programme pour l'exécution des étapes d'une méthode telle que décrite ci-dessus, lorsque ledit programme est exécuté sur un ordinateur.

D'autres aspects de l'invention seront exposés dans la description détaillée, dans les figures et dans les revendications qui suivent, ou peuvent découler de la description détaillée, ou encore être obtenus par mise en pratique de l'invention. Il doit être entendu que la description générale qui précède et la description détaillée qui suit sont données à titre explicatif et ne sont pas limitatives de l'invention telle que décrite.

**BREVE DESCRIPTION DES DESSINS**

L'invention sera bien comprise à la lecture de la description suivante d'exemples de réalisation, en référence aux dessins annexés dans lesquels :

- la figure 1 est une vue schématique d'un réseau de routeurs utilisant le protocole de routage dynamique à état de lien OSPF,

- la figure 2 est une représentation schématique des fonctions principales d'un routeur ;
- la figure 3 est une vue schématique du réseau de la figure 1 après une rupture de lien entre deux routeurs du réseau ;
- la figure 4 est un diagramme de blocs illustrant des étapes d'une méthode de détection de boucle de routage ;
- la figure 5 est un diagramme de blocs illustrant des décisions que le réseau peut prendre en fonction des résultats de la méthode illustrée à la figure 4 ;
- la figure 6 est un diagramme de blocs illustrant des étapes d'une méthode de correction d'une boucle de routage détectée après exécution de la méthode de détection illustrée à la figure 4 ;
- la figure 7 est un schéma du graphe de source du routeur C qui redémarre basé sur la topologie du réseau de la figure 1;
- la figure 8 est un schéma du graphe de source du routeur D basé sur la topologie du réseau de la figure 3;
- la figure 8A est un schéma du graphe de source du routeur B basé sur la topologie du réseau de la figure 3;
- la figure 8B est un schéma du graphe de source du routeur E basé sur la topologie du réseau de la figure 3;
- la figure 9 est un schéma du graphe de destination du routeur F basé sur la topologie du réseau de la figure 3;
- la figure 10 montre en pointillés les redirections qui doivent être opérées dans le graphe de destination de la figure 9 pour ouvrir la boucle de routage B, C, D;
- la figure 11 est un schéma du graphe de destination du routeur F après correction de la boucle de routage comme indiqué sur le schéma de la figure 10 ;
- la figure 11A est un schéma du graphe de destination du routeur G après correction de la boucle de routage B, C, D ;
- la figure 12 est un schéma du graphe de destination du routeur F une fois que le routeur C a fini son redémarrage et avant rétablissement des routeurs successeurs d'origine des routeurs A et B ;
- la figure 12A est un schéma du graphe de destination du routeur F après rétablissement des routeurs successeurs d'origine des routeurs A et B.

**DESCRIPTION DETAILLEE**

Les figures et la description ci-dessous illustrent des exemples de réalisation spécifiques de l'invention.

Afin de remédier aux problèmes exposés ci-dessus, divers modes de réalisation de l'invention proposent une méthode et un réseau de routeurs correspondants pour détecter une boucle de routage dans un réseau de routeurs qui utilise un protocole de routage dynamique à état de lien. Ce protocole de routage permet de déterminer les routes les plus courtes en fonction de l'état des liens entre les routeurs. Un tel protocole de routage est usuellement appelé protocole SPF pour "Shortest Path First" en anglais.

En particulier, dans la description détaillée ci-dessous ledit protocole est le protocole OSPF détaillé dans la RFC2328.

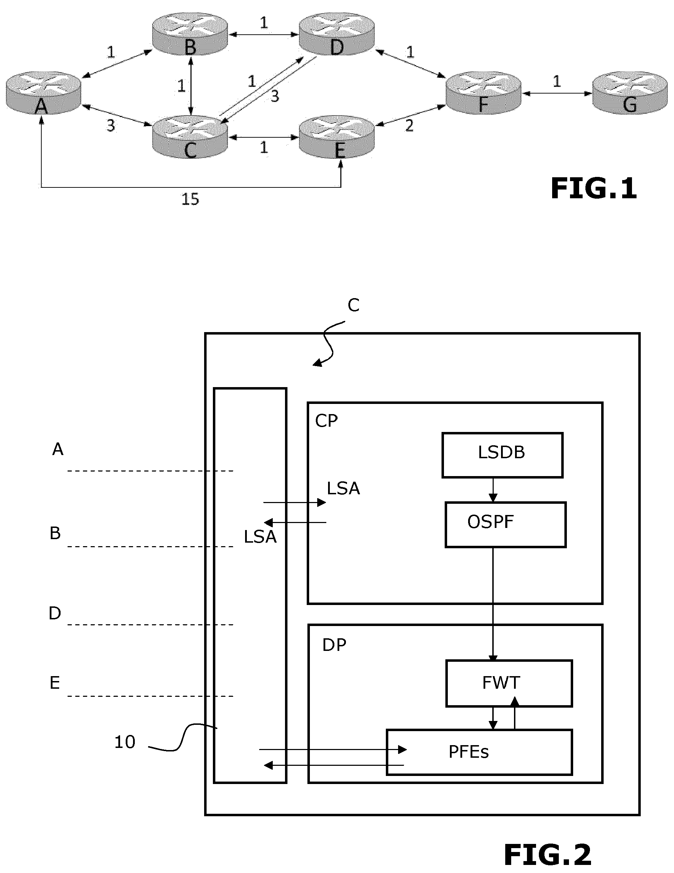

La figure 1 est une vue schématique d'un réseau de routeurs A, B, C, D, E, F, G. Une connexion entre deux routeurs est représentée par deux flèches en sens opposés. Le sens d'une flèche indique le sens de communication et le nombre associé à cette flèche représente l'état de lien de cette communication. Lesdites flèches sont aussi appelées arcs de liaison. Comme expliqué ci-dessus, l'état de lien entre deux routeurs correspond à un coût qui est un nombre déterminé en fonction du débit de données disponible entre lesdits routeurs. Plus le débit disponible est important et plus le coût est faible, par exemple 1, et plus le débit est faible plus le coût est important, par exemple 10. Le coût d'une route est calculé par addition des coûts des liens qui relient entre eux les routeurs successifs de cette route.

On peut ainsi remarquer que le coût (15) pour transmettre un paquet directement du routeur A vers le routeur E est bien plus important que le coût additionné (3+1=4) pour transmettre ce paquet en passant par le routeur C.

La figure 2 schématise les modules fonctionnels d'un routeur type du réseau de la figure 1 par exemple le routeur C interfacé avec d'autres routeurs, ici les routeurs A, B, D et E.

Le routeur type schématisé à la figure 2 comprend un système électronique et informatique permettant d'exécuter deux fonctions physiquement distinctes. L'une de ces fonctions est une fonction de contrôle CP (pour Control Plane en anglais) permettant de transmettre les données d'état de lien (LSAs) générées par ledit routeur et de recevoir les LSAs des autres routeurs pour former une table de LSAs, nommée LSDB. La fonction de contrôle CP permet également, en utilisant la table LSDB, et l'algorithme de routage Dijkstra du protocole OSPF, de calculer les routes les plus courtes en terme de coût pour atteindre chaque destination du réseau.

L'autre fonction est une fonction de transmission de données DP (pour Data Plane en anglais) qui comprend des modules de transmission de données, notés PFEs (pour Packet Forwarding Engine en anglais), configurés pour transmettre des données à leur destination conformément aux routes calculées par la fonction de contrôle CP et mémorisées dans une table de routage FWT (pour Forwarding Table en anglais). La table de routage FWT utilisée par les modules de transmission de données PFEs est destinée à être mise à jour par la fonction de contrôle CP.

Dans l'exemple de la figure 2, lesdits LSAs et les données à transmettre sont échangés entre le routeur C et les routeurs voisins A, B, D E à l'aide d'un ensemble d'interfaces 10 de connexion avec lesdits routeurs voisins A, B, D E.

La topologie du réseau illustrée à la figure 1 correspond à une topologie initiale du réseau, avant le redémarrage du routeur C en mode continuité de trafic.

Comme rappelé ci-dessus, le redémarrage en mode continuité de trafic d'un routeur, par exemple le routeur C, tel que proposé dans la RFC3623, permet de redémarrer la fonction de contrôle CP du routeur C, tout en maintenant active la fonction de transmission de données DP qui continue à transmettre les paquets de données aux routeurs successeurs indiqués dans sa table de routage FWT qui reste figée durant le redémarrage.

Pour ce faire, pendant une phase d'initialisation, le routeur C qui redémarre en mode continuité de trafic génère et transmet à ses routeurs voisins A, B, D, E, appelés routeurs assistants, des paquets d'état de lien LSAs spécifiques, appelés Grace-LSA qui indiquent aux routeurs voisins une période de grâce au cours de laquelle la fonction de contrôle de la table de routage du routeur redémarrant n'est plus active. Pendant le redémarrage du routeur, les routeurs assistants continuent de transmettre des LSAs aux autres routeurs pour indiquer que le routeur redémarrant C est toujours présent. Une fois que le routeur C a redémarré, sa fonction de contrôle est de nouveau active, ce qui lui permet de mettre à jour sa table de LSAs et de recalculer les routes pour mettre à jour sa table de routage.

Bien entendu la table de routage du routeur qui redémarre ne peut pas être modifiée pendant le redémarrage et elle reste donc figée durant ce redémarrage dans l'état où elle se trouvait juste avant le redémarrage, c'est-à-dire en accord avec la topologie initiale illustrée à la figure 1.

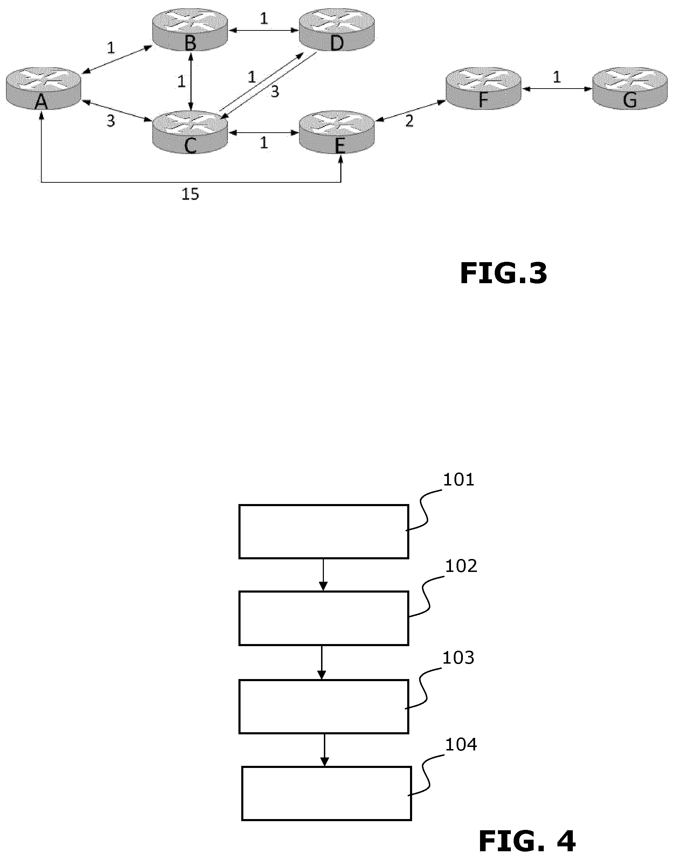

La figure 3 illustre un changement de topologie du réseau alors que le routeur C est en train de redémarrer en mode continuité de trafic. En effet, alors que le routeur C redémarre, la connexion est rompue entre le routeur D et le routeur F. Le routeur D recalcule alors les routes les plus courtes en terme de coût qui lui permettent d'atteindre les autres routeurs. Ainsi, du point de vue du routeur D, la route la plus courte pour atteindre le routeur F devient D->B -> C ->E-> F. Ainsi, le routeur D remplace dans sa table de routage son routeur successeur F initial par le routeur successeur B pour ce qui concerne la destination F.

Mais, alors que les routeurs A, B, D, E, F, G peuvent mettre à jour leur table de routage pour tenir compte de la topologie nouvelle de la figure 3, la table de routage du routeur C qui redémarre reste figée dans l'état de la topologie initiale du réseau telle qu'illustrée à la figure 1. Il en résulte que le routeur C qui reçoit du routeur B un paquet à destination du routeur F le transmet à son routeur successeur tel qu'il est défini dans sa table de routage figée, à savoir le routeur D. En effet, dans la topologie initiale illustrée à la figure 1, la route la plus courte pour transmettre depuis le routeur C des données au routeur F est la route C->D->F, alors que dans la topologie nouvelle illustrée à la figure 3, la route la plus courte devient la route C->E->F.

Il apparait ainsi une boucle de routage entre les routeurs B, D et C lorsque l'un de ces routeurs doit transmettre un paquet au routeur de destination F.

Mais, comme expliqué ci-dessus, un changement de topologie ne conduit pas nécessairement à l'apparition d'une boucle de routage. Il est donc important de pouvoir détecter si le réseau comprend une ou plusieurs destinations pour lesquelles il existe une boucle de routage.

Le schéma de procédé de la figure 4 est un exemple de réalisation d'une méthode de détection d'une telle boucle de routage.

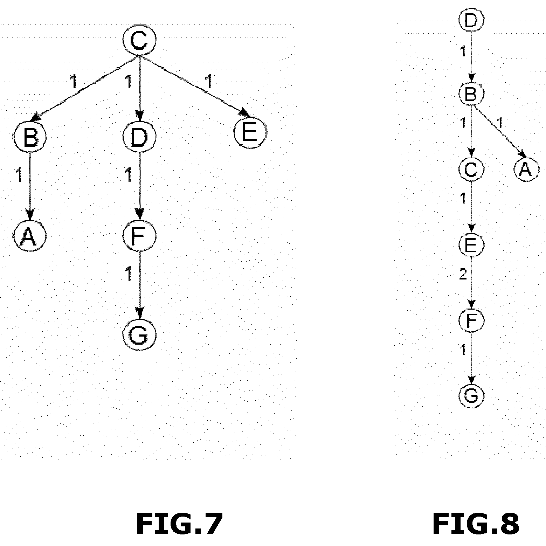

A l'étape 101, on détermine le graphe de source $G^C$ du routeur C sur la base de la topologie initiale du réseau. Ce graphe de source $G^C$ du routeur C est représenté à la figure 7.

Le graphe de source d'un routeur, dit routeur source, correspond aux routes les plus courtes selon le protocole SPF, ici le protocole OSPF, qui partent dudit routeur source pour atteindre les autres routeurs du réseau. De manière similaire, un graphe de destination d'un routeur, dit routeur de destination, correspond aux plus courts chemins selon le protocole SPF, ici le protocole OSPF, qui partent des autres routeurs du réseau pour atteindre ledit routeur de destination.

Le routeur C qui redémarre présente dans le graphe de source $G^C$ plusieurs routeurs voisins et descendants dudit routeur C, à savoir les routeurs B, D et E. On entend par routeurs voisins, des routeurs qui peuvent communiquer directement l'un avec l'autre sans passer par un routeur intermédiaire.

Il est à noter que deux routeurs voisins dans une topologie donnée de réseau de routeurs, ne sont pas nécessairement voisins dans un graphe de source ou de destination d'un routeur du réseau. Autrement dit, deux routeurs peuvent être voisins dans la topologie du réseau sans pour autant qu'il existe un arc de liaison entre ces deux routeurs dans le graphe de source ou de destination d'un autre routeur. Ainsi, bien que le routeur A soit un routeur assistant de C (car c'est l'un des voisins de C dans la topologie du réseau actuelle illustrée à la figure 3), ledit routeur A n'est pas un voisin du routeur C dans le graphe de source $G^C$ puisque la route plus courte pour aller de C à A en terme de coût implique de passer par le routeur B (voir figure 7).

Ainsi, comme détaillé ci-après, le routeur A ne sera pas utilisé pour détecter une boucle de routage. Les voisins du routeur C dans le graphe $G^C$ suffisent pour détecter une boucle de routage.

Dans un graphe de destination d'un routeur de destination, un arc de liaison entre deux autres routeurs implique que non seulement ces deux routeurs sont voisins, mais également qu'il existe un routeur dit émetteur pour lequel ces deux autres routeurs appartiennent à la route la plus courte qui permet de transmettre des données depuis ce routeur émetteur jusqu'à ce routeur de destination.

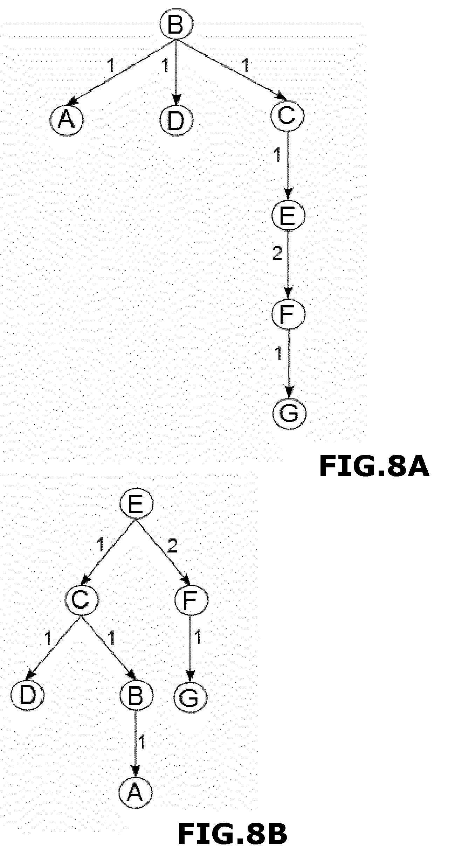

A l'étape 102 de la figure 4, on détermine le graphe de source de chaque routeur de détection B, D et E sur la base de la topologie actuelle du réseau. Ainsi, avec le réseau de routeurs A, B, C, D, E, F, G, on détermine les graphes de source $G^B$ (figure 8A), $G^D$ (figure 8) et $G^E$ (figure 8B).

A l'étape 103, on détermine les ensembles $D_B$, $D_D$ et $D_E$ qui représentent respectivement les descendants des routeurs assistants B, D, E dans le graphe de source $G^C$. On détermine aussi les ensembles $E_B$, $E_D$, $E_E$ qui représentent les descendants du routeur C qui redémarre dans, respectivement, les graphes de source $G^B$, $G^D$ et $G^E$

On obtient ainsi :

$$D_B = \{A\}, \ E_B = \{E, F, G\},$$

$$D_D = \{F, G\}, \ E_D = \{E, F, G\},$$

$$D_E = vide, \ et \ E_E = \{D, B, A\}.$$

A l'étape 104, on détermine l'intersection notée $C_k$ de l'ensemble $D_k$ avec l'ensemble $E_k$, K étant le routeur de détection considéré (c'est-à-dire B, D et E). Chaque routeur appartenant à l'ensemble $C_k$ est considéré comme un routeur à risque. En effet, si un routeur appartenant à $C_k$ est le destinataire d'un paquet transitant par le routeur C qui redémarre, il apparait alors une boucle de routage au niveau de ce routeur C qui empêche le paquet d'être acheminé audit routeur destinataire.

Avec le réseau A, B, C, D, E, F, et G dont la topologie initiale est représentée à la figure 1 et dont la topologie actuelle est représentée à la figure 3, les résultats de l'étape 103 permettent de déterminer que :

$C_B$ est vide,
$C_D = \{F,G\}$,
et $C_E$ est vide.

L'ensemble des destinations à risque est l'union des ensembles $C_B$, $C_D$ et $C_E$ et vaut $\{F, G\}$.

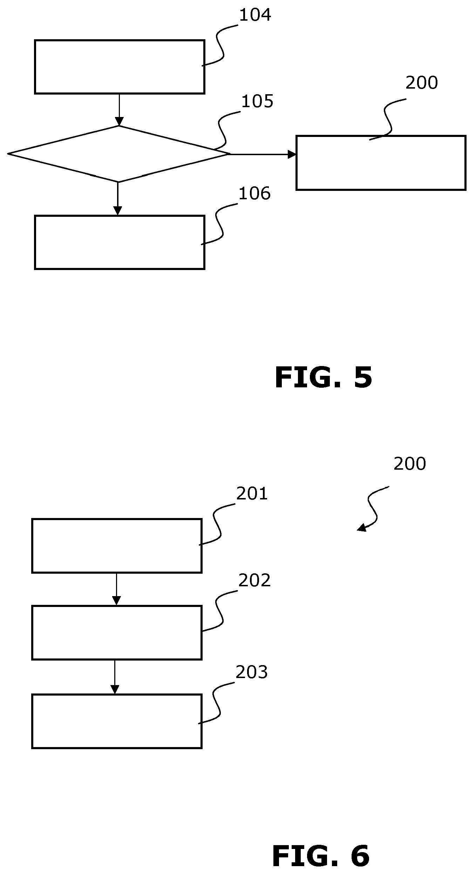

Le schéma de procédé de la figure 5, illustre un mode de réalisation des décisions que le réseau peut appliquer en fonction du résultat de l'étape 104. Si l'ensemble des destinations à risque est vide, cela signifie qu'il n'y a pas de routeur de destination dans le réseau qui risque d'entrainer une boucle de routage. Il n'est donc pas nécessaire dans ce cas d'interrompre le redémarrage en mode continuité de trafic du routeur C, de sorte que les autres routeurs du réseau conservent le routeur C dans leur table de routage (étape 105), ce qui leur évite de devoir reconverger.

A l'inverse, si l'ensemble des destinations à risque est non vide, cela signifie qu'il existe au moins un routeur de destination dans le réseau qui risque d'entraîner une boucle de routage.

Selon un mode de réalisation préféré, il est alors prévu de mettre en oeuvre une méthode 200 de correction de ladite boucle de routage. Un exemple de mise en oeuvre de cette méthode 200 est illustré par le schéma de procédé de la figure 6 pour le routeur de destination à risque F.

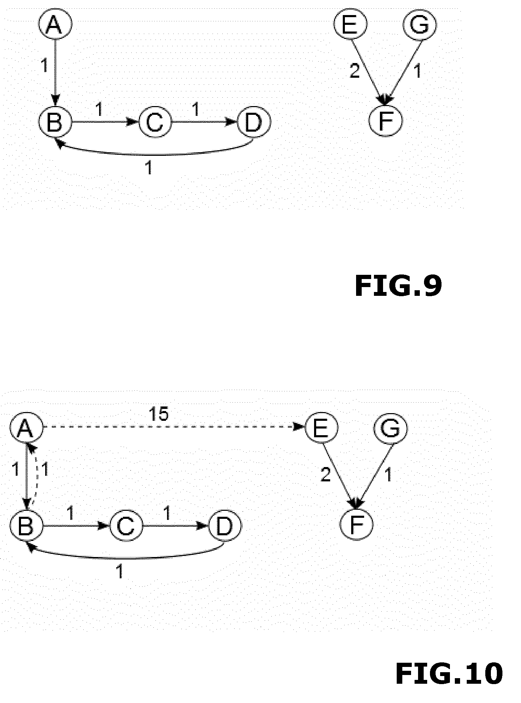

A l'étape 201, on détermine le graphe de destination $G_F$ du routeur de destination à risque F. Dans l'exemple du réseau A, B, C, D, E, F, G, ce graphe de destination est illustré à la figure 9. Ce graphe de destination $G_F$ comprend une première composante connexe formée d'une boucle de routage qui contient le routeur C, à savoir la boucle B, C, D, et le routeur A, ascendant de cette boucle de routage, dont le routeur successeur est le routeur B.

Le graphe de destination du routeur F comprend aussi une deuxième composante connexe, qui contient le routeur de destination F et les routeurs ascendants E et G.

Comme détaillé ci-dessous, il est possible de supprimer la boucle de routage B, C, D en déterminant, pour chaque routeur du réseau, le nombre minimal de routeurs qui doivent changer de routeur successeur pour que soit créée une route permettant d'atteindre le routeur de destination F associé à la boucle de routage.

Ainsi, à l'étape 202, on détermine pour chacun des routeurs A, B, D, E et G dudit graphe de destination $G_F$ du routeur de destination à risque F, le nombre minimal de routeurs qui doivent changer leur routeur successeur dans les tables de routage pour permettre à des données transmises par ledit routeur A, B, D, E, G d'atteindre le routeur de destination à risque F. Ce nombre minimal de routeurs est appelé nombre de redirections minimal et est un entier supérieur ou égale à 0.

Les routeurs E, F et G qui appartiennent à la deuxième composante du graphe de destination du routeur F ont un nombre de redirections minimal de routeur égal à 0. En effet, il existe déjà dans le graphe de destination $G_F$ une route qui permet à ces routeurs d'atteindre la destination F.

Le routeur A n'appartient pas à cette seconde composante connexe mais présente dans la topologie du réseau actuelle (voir figure 3) un routeur voisin, à savoir le routeur E, dont le nombre de redirections minimal de routeur est égal à 0. Le nombre de redirections minimal de routeur associé au routeur A est donc de 1 puisqu'il suffit qu' un seul routeur, à savoir le routeur A lui-même, change de routeur successeur pour créer une route (A, E, F) du routeur A vers le routeur de destination F. De façon similaire, il est nécessaire dans la topologie actuelle de rediriger au moins deux routeurs, à savoir les routeurs A et B, pour que le routeur B puisse atteindre le routeur de destination F. Le nombre de redirections minimal de routeur associé au routeur B est donc de 2.

Les routeurs C et D appartenant à la boucle ont un nombre de redirections minimal égal à celui du routeur B. Bien entendu, le routeur C ne peut être redirigé pendant son démarrage puisque sa table de routage est figée. Ainsi, bien qu'il existe dans la topologie actuelle une liaison C-E, le routeur C ne peut être redirigé vers le routeur E pendant son redémarrage.

La plus grande valeur du nombre de redirections minimal ainsi déterminé est notée Rmax. On peut prévoir que si la valeur Rmax est supérieure ou égal à une valeur seuil prédéfinie, on considère que la boucle est corrigible, mais à un coût trop important, de sorte que l'on renonce à cette correction. De manière similaire, si la valeur Rmax vaut l'infini, la boucle n'est pas corrigible. Le redémarrage en mode continuité de trafic du routeur redémarrant C est arrêté. Le routeur C redémarre alors de manière classique en étant retiré de la topologie du réseau, conformément à ce que prévoit le protocole OSPF dans la RFC2328, ce qui entraine une reconvergence du réseau.

Dans l'exemple illustré aux figures, Rmax = 2. Ainsi, à l'étape 203, pour R = 1 à Rmax, on redirige pour chaque ensemble de routeur(s) présentant un nombre de redirections minimal égal R, un routeur dudit ensemble de routeur(s) vers un routeur d'un ensemble de routeur(s) présentant un nombre de redirections minimal égal à R-1. La redirection d'un premier routeur vers un troisième routeur à la place d'un deuxième routeur consiste à spécifier dans la table de routage du premier routeur que le troisième routeur est le nouveau routeur successeur du premier routeur (pour une destination donnée) à la place du deuxième routeur initialement désigné comme routeur successeur.

Pour éviter l'apparition de boucle de routage provisoire lors des redirections de routeurs, l'ordre de redirection desdits routeurs à rediriger est l'ordre croissant de leur nombre de redirections.

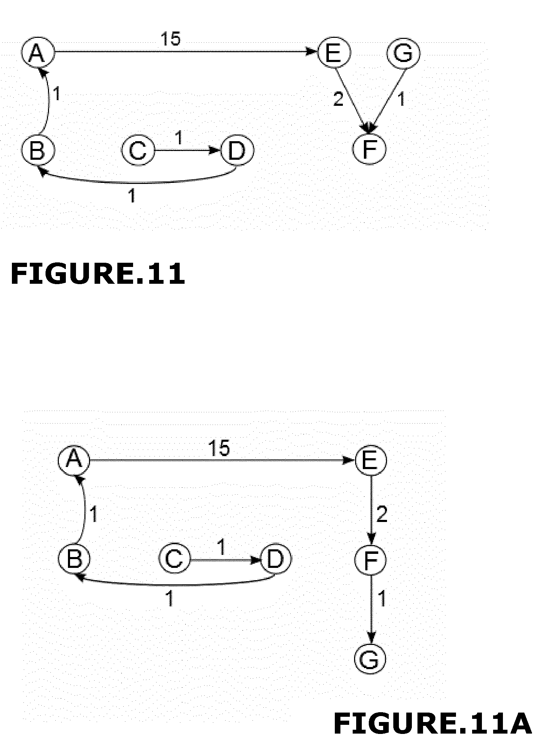

Ainsi, dans l'exemple illustré à la figure 10, le routeur A (ayant 1 pour nombre de redirections minimal associé) est d'abord redirigé vers le routeur E. Puis ledit routeur B (ayant 2 pour nombre de redirections minimal associé) est redirigé vers le routeur A. La figure 11 montre le graphe de destination du routeur F, une fois les routeurs A et B redirigés de manière à ouvrir la boucle de routage B, C, D. Ainsi, grâce aux redirections opérées un paquet transmis par le routeur D et à destination du routeur F emprunte la route D, B, A, E, F. Il est à noter que cette nouvelle route est affectée à la destination à risque F. A titre d'exemple, pour atteindre la destination E, depuis le routeur D, la route utilisée est la route D, B, C, E, car dans ce cas, le passage par le routeur C, bien que sa table de routage soit figée, ne génère pas pour autant de boucle de routage.

Une telle détermination du nombre de redirections minimal associé à chaque routeur du réseau peut être généralisée par l'algorithme suivant.

Les routeurs du réseau sont numérotés de 1 à n, avec 1 correspondant au routeur de destination à risque F. Le nombre de redirections minimal associé au routeur numéroté i, noté $R_i$, est égal à la valeur minimale de l'ensemble de valeurs [$R_j$ + $r_{ij}$] calculées pour tout j appartenant à V(i), soit $R_i$ = min (j appartenant à v(i)) [$R_j$ + $r_{ij}$]

  avec i allant de 1 à n, et V(i) correspondant aux routeurs voisins du routeur numéroté i,
  et avec $r_{ij}$ égal à

  - une valeur prédéfinie, ou une valeur non affectée, correspondant à l'infini, si les routeurs i et j ne sont pas voisins dans la topologie actuelle du réseau, c'est-à-dire s'il n'existe pas d'interface de communication directe entre le routeur i et le routeur j ;
  - la valeur 0 s'il existe un arc de liaison entre les routeurs i et j dans le graphe de destination $G_F$ du routeur de destination à risque F ;
  - la valeur 1 sinon (en particulier si les routeurs i et j sont voisins dans la topologie actuelle du réseau, mais qu'il n'existe pas d'arc de liaison entre les routeurs i et j dans le graphe de destination $G_F$ du routeur F).

Il est à noter que le nombre de redirections minimal $R_i$ associé au routeur i, est obtenu par itération de la manière suivante :

$$R_i^{t+1} = \min {}_{(j \text{ appartenant à } V(i))} \left[ R_j^t + r_{ij} \right]$$

  avec t étant égal à 0 initialement et étant incrémenté de 1 à chaque itération, et avec $R_i^t$ = 0 pour tout t et pour tout i pour lequel il existe une route d'accès au routeur à risque F dans le graphe de destination $G_F$ du routeur à risque F,
  et avec
  $R_i^0$ = une valeur prédéfinie, ou une valeur non affectée, correspondant à l'infini, pour chaque routeur i pour lequel il n'existe pas de route d'accès au routeur à risque F dans le graphe de destination $G_F$ du routeur à risque F.

Après redémarrage du routeur C, les données d'état de lien LSAs entre ledit routeur C et les routeurs assistants A, B, D, E dudit routeur C sont mises à jour, ainsi que la table de routage dudit routeur C.

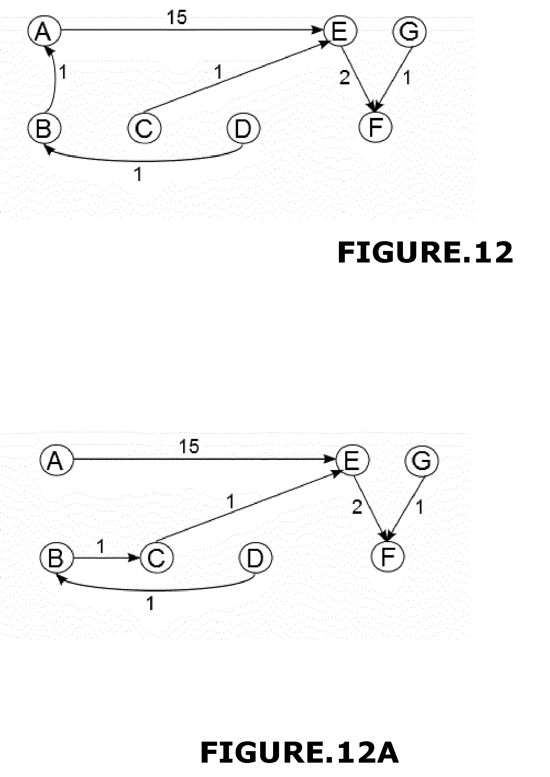

Comme illustré à la figure 12, la mise à jour de la table de routage permet au routeur C de définir E comme routeur successeur, à la place du routeur D, pour atteindre la destination F.

Les routeurs A et B précédemment redirigés peuvent alors rétablir leur routeur successeur d'origine en ce qui concerne la destination F afin de revenir à un comportement OSPF normal du réseau.

Pour éviter l'apparition de boucle de routage provisoire lors du rétablissement des routeurs successeurs d'origine, les routeurs A et B concernés sont redirigés dans l'ordre décroissant de leur nombre de redirections.

Ainsi, comme illustré à la figure 12A, le routeur B (ayant 2 pour nombre de redirections minimal associé), rétablit son routeur successeur C d'origine avant que le routeur A (ayant 1 pour nombre de redirections minimal associé) ne rétablisse son routeur successeur B d'origine, de sorte qu'aucune boucle de routage provisoire n'est créée.

Suite à l'exécution d'une méthode de détection de boucle comme détaillé ci-avant, il apparait que le routeur de destination à risque G est, dans le graphe de source $G^D$ du routeur de détection D, un descendant du routeur de destination à risque F. Les tables de routage des routeurs A et B qui sont redirigés pour atteindre le routeur à risque F sont alors aussi modifiées pour atteindre le routeur à risque G.

Ainsi, comme illustré plus en détail à la figure 11A, pour atteindre la destination G, le routeur A est redirigé vers le routeur E, puis le routeur B est redirigé vers le routeur A, de manière similaire aux redirections opérées concernant les routeurs A et B pour atteindre la destination F. Ainsi, un paquet transmis par le routeur C peut atteindre la destination G par la route C->D->B->A->E->F->G.

On comprend que la route créée pour atteindre la destination F peut également être utilisée pour atteindre la destination G. Il en résulte qu'il est possible de secourir plusieurs destinations à risque en ne modifiant les tables de routage que d'un petit nombre de routeurs, ce qui permet de conserver un trafic performant, par comparaison avec la correction de toutes les tables de routage qui serait requise en cas d'application normale du protocole OSPF.

L'homme du métier comprend aisément que les différentes étapes et fonctions des modes de réalisations présentés ci-dessus peuvent être réalisées sous forme de programmes d'ordinateur. En particulier, les étapes décrites ci-dessus peuvent être réalisées sous forme d'instructions électroniques et/ou informatiques exécutables par les différents routeurs du réseau.

Ces programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent également être exécutés à partir de périphériques de stockage de programme.

## Revendications

1.  Méthode pour détecter, dans un réseau de routeurs (A, B, C, D, E, F, G) utilisant un protocole de routage dynamique à état de lien, appelé protocole SPF, une destination risquant de générer une boucle de routage lorsque ledit réseau de routeurs passe :

- d'une topologie donnée, appelée topologie initiale, avant le redémarrage d'un routeur (C) selon un mode, dit continuité de trafic, pour lequel la fonction de contrôle (CP) de la table de routage du routeur (C) est redémarrée, mais pour lequel la fonction de transmission de données (DP) reste active,

- à, au cours du redémarrage dudit routeur (C), une topologie différente, dite topologie actuelle, pour laquelle au moins un autre routeur (D) a modifié dans sa table de routage, pour au moins une destination donnée, son routeur successeur,

un graphe de source d'un routeur correspondant aux routes les plus courtes selon le protocole SPF, qui partent dudit routeur source pour atteindre les autres routeurs du réseau, et un graphe de destination d'un routeur correspondant aux routes les plus courtes selon le protocole SPF, qui partent des autres routeurs du réseau pour atteindre ledit routeur,

ladite méthode comprenant les étapes suivantes:

- détermination du graphe de source du routeur (C) redémarrant sur la base de ladite topologie initiale du réseau ;
- pour chacun des routeurs (B, D, E), appelés routeurs de détection, qui sont voisins du routeur (C) redémarrant dans le graphe de source dudit routeur (C) redémarrant, détermination du graphe de source du routeur de détection (B, D, E) correspondant sur la base de la topologie actuelle du réseau ;
- pour chaque routeur de détection (B, D, E), détermination d'un premier ensemble comprenant les routeurs descendants dudit routeur de détection (B, D, E) dans le graphe de source du routeur (C) redémarrant, et d'un deuxième ensemble comprenant les routeurs descendants du routeur (C) redémarrant dans le graphe de source dudit routeur de détection (B, D, E) ;
- pour chaque routeur de détection (B, D, E), détermination d'un troisième ensemble, formé de l'intersection du premier ensemble et du deuxième ensemble ;
- calcul de l'ensemble des destinations à risque comme étant l'union des troisièmes ensembles.

**2.** Méthode selon la revendication 1, dans laquelle ledit protocole de type SPF est le protocole OSPF.

**3.** Méthode selon la revendication 1 ou 2, **caractérisé en ce que** si l'union desdits troisièmes ensembles est vide, le redémarrage du routeur (C) en mode continuité de trafic est maintenu.

**4.** Méthode de correction de boucle de routage dans un réseau de routeurs (A, B, C, D, E, F, G) utilisant un protocole de routage dynamique à état de lien, appelé protocole SPF, et pour laquelle l'union desdits troisièmes ensembles obtenus selon une méthode conforme à l'une des revendications 1 ou 2, comprend un routeur (F), appelé routeur de destination à risque, ladite méthode comprenant les étapes de :

- détermination du graphe de destination du routeur de destination à risque (F) ;
- détermination pour chacun des routeurs (A, B, D, E, G) dudit graphe de destination du routeur de destination à risque (F), éventuellement à l'exception du routeur redémarrant (C), du nombre minimal de routeurs du réseau qui doivent changer leur routeur successeur, appelé nombre de redirections minimal, pour atteindre le routeur de destination à risque (F), la plus grande valeur du nombre de redirections minimal ainsi déterminée étant notée Rmax,
- pour R = 1 à Rmax, redirection, pour chaque ensemble de routeur(s) présentant un nombre de redirections minimal égal R, d'un routeur dudit ensemble de routeur(s) vers un routeur d'un ensemble de routeur(s) présentant un nombre de redirections minimal égal à R-1.

**5.** Méthode selon la revendication 4, dans laquelle les routeurs (E, G) qui dans le graphe de destination du routeur de destination à risque (F) font partie d'une route d'accès au routeur de destination à risque (F), présentent un nombre de redirections minimal égal à 0.

**6.** Méthode selon l'une des revendications 4 ou 5, dans laquelle l'ordre de redirection desdits routeurs à rediriger est l'ordre croissant de leur nombre de redirections.

**7.** Méthode selon l'une des revendications 4 à 6, dans laquelle si la valeur Rmax est supérieure à une valeur seuil prédéfinie, ou si Rmax vaut l'infini, l'étape de redirection de routeur n'est pas effectuée et le redémarrage en mode continuité de trafic du routeur redémarrant (C) est arrêté.

**8.** Méthode selon la revendication 7, dans laquelle le routeur redémarrant (C) est retiré de la topologie du réseau et les autres routeurs (A, B, D, E, F, G) recalculent leur table de routage en fonction de la nouvelle topologie.

**9.** Méthode selon l'une des revendications 4 à 8, dans laquelle, après redémarrage du routeur (C) correspondant, les routeurs redirigés sont de nouveau redirigés vers leur routeur successeur d'origine dans l'ordre décroissant de leur nombre de redirections.

**10.** Méthode selon l'une des revendications précédentes, dans laquelle, après redémarrage du routeur (C) correspondant, les données d'état de lien (LSA) entre ledit routeur (C) et les routeurs voisins dudit routeur (C) sont mises à jour, ainsi que la table de routage dudit routeur (C).

**11.** Méthode selon l'une des revendications 4 à 10, dans laquelle, lorsque suite à l'exécution d'une méthode de détection de boucle conformément à l'une des revendications 1 à 3, au moins deux routeurs de destination à risque (F, G) sont déterminés et que l'un des routeurs de destination à risque, dit deuxième routeur (G) à risque, est, dans le graphe de source d'un des routeurs de détection (D), un descendant de l'autre routeur de destination à risque (F), appelé premier routeur à risque,
la ou les tables de routage du ou des routeurs redirigés (A, B) pour atteindre le premier routeur à risque (F) sont également modifiées pour atteindre le deuxième routeur à risque (G).

**12.** Réseau de routeurs (A, B, C, D, E, F, G) configurés pour utiliser un protocole de routage dynamique de type à état de lien, appelé protocole SPF, lesdits routeurs étant configurés pour détecter au moins une destination risquant de générer une boucle de routage selon une méthode conforme à l'une des revendications 1 à 3.

**13.** Réseau de routeurs (A, B, C, D, E, F, G) selon la revendication 12, lesdits routeurs étant aussi configurés pour corriger ladite au moins une boucle de routage selon une méthode conforme à l'une des revendications 4 à 11.

**14.** Programme d'ordinateur comprenant des instructions de code de programme pour l'exécution des étapes d'une méthode selon l'une des revendications 1 à 11 lorsque ledit programme est exécuté sur un ordinateur.


**Patentansprüche**

**1.** Verfahren zum Ermitteln in einem Netzwerk von Routern (A, B, C, D, E, F, G), das ein dynamisches Verbindungsstatus-Routing-Protokoll, das SPF-Protokoll genannt wird, verwenden, eines Ziels, das Gefahr läuft eine Routing-Schleife zu erzeugen, wenn das Router-Netzwerk von:

   - einer gegebenen Topologie, der Anfangstopologie, vor dem Neustarten eines Routers (C) nach einem Modus, der Kontinuität des Verkehrs, für den die Steuerfunktion (CP) der Routing-Tabelle des Routers (C) neu gestartet wird, aber für den die Datenübertragungsfunktion (DP) aktiv bleibt,
   - während des Neustartens des Routers (C) zu einer anderen Topologie, der aktuellen Topologie, übergeht, für die mindestens ein anderer Router (D) in seiner Routing-Tabelle für mindestens ein gegebenes Ziel seinen Nachfolgerouter modifiziert hat,

   wobei ein Quell-Graph eines Routers den kürzesten Routen nach dem SPF-Protokoll entspricht, die von dem Quell-Router ausgehen, um die anderen Router des Netzwerks zu erreichen, und ein Zielgraph eines Routers den kürzesten Routen nach dem SPF-Protokoll entspricht, die von anderen Routern des Netzwerks ausgehen, um den Router zu erreichen,
   wobei das Verfahren die folgenden Schritte aufweist:

   - Bestimmen des Quell-Graphen des Routers (C), der neu startet, auf der Grundlage der Anfangstopologie des Netzwerks;
   - für jeden der Router (B, D, E), die Ermittlungs-Router genannt werden, die dem Router (C), der neu startet, in dem Quell-Graphen des Routers (C), der neu startet, benachbart sind, Bestimmen des Quell-Graphen des entsprechenden Ermittlungs-Routers (B, D, E) auf der Grundlage der aktuellen Topologie des Netzwerks;
   - für jeden Ermittlungs-Router (B, D, E) Bestimmen einer ersten Anordnung, die die Nachfolge-Router des Ermittlungs-Routers (B, D, E) in dem Quell-Graphen des Routers (C), der neu startet, aufweist, und einer zweiten Anordnung, die die Nachfolge-Router des Routers (C), der neu startet, in dem Quell-Graphen des Ermittlungs-Routers (B, D, E) aufweist;
   - für jeden Ermittlungs-Router (B, D, E) Bestimmen einer dritten Anordnung, die durch den Schnittpunkt der ersten Anordnung und der zweiten Anordnung gebildet wird;
   - Berechnen der Gesamtheit der Risiko-Ziele, die die Vereinigung der dritten Anordnungen sind.

**2.** Verfahren nach Anspruch 1, wobei das SPF-Protokoll das OSPF-Protokoll ist.

**3.** Verfahren nach Anspruch 1 oder 2, **dadurch gekennzeichnet, dass**, wenn die Vereinigung der dritten Anordnungen leer ist, das Neustarten des Routers (C) in dem Modus der Kontinuität des Verkehrs aufrechterhalten wird.

**4.** Verfahren zum Korrigieren einer Routing-Schleife in einem Netzwerk von Routern (A, B, C, D, E, F, G), das ein dynamisches Verbindungsstatus-Routing-Protokoll, das SPF-Protokoll genannt wird, verwendet, und für das die Vereinigung der dritten Anordnungen, die nach einem Verfahren in Konformität mit einem der Ansprüche 1 oder 2 erhalten werden, einen Router (F) aufweist, der Risiko-Zielrouter genannt wird, wobei das Verfahren die folgenden Schritte aufweist:

- Bestimmen des Zielgraphen des Risiko-Zielrouters (F) ;
- Bestimmen für jeden der Router (A, B, D, E, G) des Zielgraphen des Risiko-Zielrouters (F), eventuell mit Ausnahme des Routers (C), der neu startet, der Mindestanzahl der Router des Netzwerks, die ihren Nachfolgerouter ändern müssen, die Mindestanzahl der Umleitungen genannt wird, um den Risiko-Zielrouter (F) zu erreichen, wobei der auf diese Weise bestimmte größte Wert der Mindestanzahl der Umleitungen mit Rmax bezeichnet wird,
- für R = 1 bei Rmax, Umleiten für jede Anordnung eines (von) Routers (Routern), die eine Mindestanzahl von Umleitungen, die gleich R ist, aufweist, eines Routers der Anordnung eines (von) Routers (Routern) zu einem Router einer Anordnung eines (von) Routers (Routern), die eine Mindestanzahl von Umleitungen aufweist, die gleich R-1 ist.

5. Verfahren nach Anspruch 4, wobei die Router (E, G), die in dem Zielgraphen des Risiko-Zielrouters (F) Teil einer Zugriffsroute auf den Risiko-Zielrouters (F) sind, eine Mindestanzahl von Umleitungen aufweisen, die gleich 0 ist.

6. Verfahren nach einem der Ansprüche 4 oder 5, wobei die die Umleitungsreihenfolge der umzuleitenden Router die aufsteigende Reihenfolge ihrer Anzahl an Umleitungen ist.

7. Verfahren nach einem der Ansprüche 4 bis 6, wobei, wenn der Wert Rmax größer als ein vorbestimmter Schwellenwert ist, oder wenn Rmax den Wert Null hat, der Schritt des Umleitens des Routers nicht durchgeführt wird und das Neustarten des Routers in dem Modus der Kontinuität des Verkehrs des Routers (C), der neu startet, gestoppt wird.

8. Verfahren nach Anspruch 7, wobei der Routers (C), der neu startet, von der Topologie des Netzwerks herausgenommen wird und die anderen Router (A, B, D, E, F, G) ihre Routing-Tabelle in Abhängigkeit von der neuen Topologie neu berechnen.

9. Verfahren nach einem der Ansprüche 4 bis 8, wobei, nach dem Neustarten des entsprechenden Routers (C) die umgeleiteten Router erneut zu ihrem ursprünglichen Nachfolgerouter in absteigender Reihenfolge ihrer Anzahl an Umleitungen umgeleitet werden.

10. Verfahren nach einem der vorhergehenden Ansprüche, wobei, nach dem Neustarten des entsprechenden Routers (C) die Daten des Verbindungsstatus (LSA) zwischen dem Router (C) und den benachbarten Routern des Routers (C) und die Routing-Tabelle des Routers (C) aktualisiert werden.

11. Verfahren nach einem der Ansprüche 4 bis 10, wobei, wenn nach dem Durchführen eines Verfahrens zum Ermitteln einer Schleife in Konformität mit einem der Ansprüche 1 bis 3 mindestens zwei Risiko-Zielrouter (F, G) ermittelt werden und einer der Risiko-Zielrouter, der zweite Risiko-Zielrouter (G), in dem Quell-Graphen einer der Ermittlungs-Router (D), ein Nachfolger des anderen Risiko-Zielrouters (F), der erster Risiko-Zielrouter genannt wird, ist, wird (werden) die Routing-Tabelle (n) des oder der Router (A, B), die umgeleitet werden, um den ersten Risiko-Zielrouter (F) zu erreichen, ebenfalls modifiziert, um den zweiten Risiko-Zielrouters (G) zu erreichen.

12. Netzwerk von Routern (A, B, C, D, E, F, G), die konfiguriert sind, um ein dynamisches Verbindungsstatus-Routing-Protokoll, das SPF-Protokoll genannt wird, zu verwenden, wobei die Router konfiguriert sind, um mindestens ein Ziel, das Gefahr läuft eine Routing-Schleife zu erzeugen, nach einem Verfahren in Konformität mit einem der Ansprüche 1 bis 3 zu erzeugen.

13. Netzwerk von Routern (A, B, C, D, E, F, G) nach Anspruch 12, wobei die Router auch konfiguriert sind, um die mindestens eine Routing-Schleife nach einem Verfahren in Konformität mit einem der Ansprüche 4 bis 11 zu korrigieren.

14. Computerprogramm, das Programmcodebefehle für die Ausführung der Schritte eines Verfahrens nach einem der Ansprüche 1 bis 11 aufweist, wenn das Programm auf einem Computer ausgeführt wird.

**Claims**

1. A method for detecting, in a network of routers (A, B, C, D, E, F, G) using a dynamic link state routing protocol, referred to as the SPF protocol, a destination that could generate a routing loop when said network of routers changes from:

- a given topology, referred to as the initial topology, before the reboot of a router (C) in one mode, referred to as continuity of traffic mode, for which the control function (CP) of the routing table of the router (C) is rebooted, but for which the data transmission function (DP) remains active,

- to, in the course of rebooting said router (C), a different topology, referred to as the current topology, for which at least one other router (D) has modified in its routing table, for at least a given destination, its successor,

a source graph for a router corresponding to the shortest paths according to the SPF protocol, which extend from said source router to reach the other routers in the network, and a destination graph of a router corresponding to the shortest paths according to the SPF protocol, which leave other routers in the network to reach said router,
said method comprising the steps of:

- determining the source graph for the rebooting router (C) on the basis of said initial network topology;
- for each of routers (B, D, E), referred to as detecting routers, which are adjacent to said rebooting router (C) in the source graph of said rebooting router (C), determining the corresponding detecting router (B, D, E) source graph based on the current network topology;
- for each detecting router (B, D, E), determining a first set of routers comprising descendants of said detecting router (B, D, E) in the rebooting router (C) source graph, and a second set of routers comprising descendant routers from the rebooting router (C) in the source graph of said detecting router (B, D, E);
- for each detecting router (B, D, E) determining a third set, formed by the intersection of the first set and the second set;
- calculating a set of destinations at risk as being the union of the third sets.

2. Method according to claim 1, wherein said SPF type protocol is the OSPF protocol.

3. Method according to claim 1 or 2, **characterized in that** if the union of said third sets is empty, rebooting of router (C) in traffic continuity mode is maintained.

4. Method for routing loop correction in a network of routers (A, B, C, D, E, F, G) using a dynamic routing link state protocol, referred to as the SPF protocol, and for which the union of said third sets obtained by a method according to any of claims 1 or 2 includes a router (F), referred to as a destination router at risk, said method comprising the steps of:

- determining a destination graph for the destination router at risk (F);
- determining for each of the routers (A, B, D, E, G) in said destination graph for the destination router at risk (F), optionally excluding the rebooting router (C), the minimum number of routers in the network which must change their successor router, referred to as the minimum number of redirects to reach the destination router at risk (F), the largest value for the minimum number of redirects thus determined being denoted Rmax,
- for R = 1 to Rmax, redirecting, for each set of router(s) having a minimum number of redirects equal to R, a router of said set of router(s) to a router of a set of router(s) having a minimum number of redirects equal to R-1.

5. Method according to claim 4, wherein the routers (E, G) which in the destination graph of the destination router at risk (F) are part of an access path to the destination router at risk (F), have a minimum number of redirects equal to 0.

6. Method according to one of claims 4 or 5, wherein the order of redirecting said routers to be redirected is the ascending order of their number of redirects.

7. Method according to one of claims 4 to 6, wherein if the Rmax value exceeds a predetermined threshold value, or if Rmax is infinity, the router redirection step is not performed and rebooting in traffic continuity mode of the rebooting router (C) is stopped.

8. The method according to claim 7, wherein the rebooting router (C) is removed from the network topology and the other routers (A, B, D, E, F, G) recalculate their routing table based on the new topology.

9. The method according to one of claims 4 to 8, wherein after rebooting of the corresponding router (C), redirected routers are again redirected to their original successor router in descending order of their number of redirects.

10. Method according to one of the preceding claims, wherein, after rebooting the corresponding router (C), link state data (LSA) between said router (C) and the neighboring routers of said router (C) is updated, as well as the routing table of said router (C).

11. Method according to one of claims 4 to 10, wherein when, as a result of the execution of a loop detection method according to one of claims 1 to 3, at least two destination routers at risk (F, G) are determined and one of the destination routers at risk, referred to as the second router (G) at risk is, in the source graph of one of the detecting routers (D), a descendant of the other destination router at risk (F), referred to as the first router at risk,
the routing table(s) of the redirected router or routers (A, B) to reach the first router at risk (F) are also modified to reach the second router at risk (G).

**12.** A network of routers (A, B, C, D, E, F, G) configured to use a dynamic routing protocol of the link state type known as the SPF protocol, said routers being configured to detect at least a destination at risk of generating a routing loop according to a method according to any one of claims 1 to 3.

**13.** The network of routers (A, B, C, D, E, F, G) according to claim 12, said routers being also configured to correct said at least one routing loop according to a method according to any one of claims 4 to 11.

**14.** A computer program comprising program code instructions for executing the steps of a method according to one of claims 1 to 11 when said program is run on a computer.

**FIG.1**

**FIG.2**

# FIG.3

# FIG. 4

**FIG. 5**

**FIG. 6**

**FIG.7**

**FIG.8**

**FIG.8A**

**FIG.8B**

**FIG.9**

**FIG.10**

**FIGURE.11**

**FIGURE.11A**

**FIGURE.12**

**FIGURE.12A**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **AMAN SHAIKH ; ROHIT DUBE ; ANUJAN VARMA.**
  Avoiding Instability During Graceful Shutdown of Multiple OSPF Routers. ACM, 2006